# EUROPEAN PATENT APPLICATION

(11) **EP 2 353 827 A1**
(43) Date of publication of application: **10.08.2011**
(21) Application number: 10400013.8
(22) Date of filing: 10.02.2010
(51) Int. Cl.: B29C 31/06, B29B 7/24

(54) **Method for preparing a composite material of multi components**

(71) Applicant: Eurocopter Deutschland GmbH, 86609 Donauwörth (DE)
(72) Inventor: Mühlthaler, Paul, 80538 München (DE)
(74) Representative: Pouillot, Laurent Pierre Paul

(57) **Abstract**

The invention relates to a method for preparing a composite material of more than one component with the steps of providing at least two resin components (Kₐ, K_{b}, ... Kₓ) in at least one container (f), measuring the at least two resin components (Kₐ, K_{b}, ... Kₓ) in the at least one container (f), making each of the at least one container (f) with the respective resin components (Kₐ, K_{b}, ... Kₓ) separately available to a mixer (h), mixing of the respective resin components (Kₐ, K_{b}, ... Kₓ) in the at least one container (f) to a resin compound and filling of the resin compound from the at least one container (f) into a supply station (a) of an injection device for a composite material.

## Description

The invention relates to a method for preparing a composite material of multi components according to the features of claim 1.

Composite materials are made of either one component resins or of multi components resins. The preparation of composite materials is generally accomplished with the basic steps of conveying the resin by means of a system of tubes from a supply station to a tissue to be covered for reinforcement. Joining of the resin and the tissue to be reinforced is effected in a mould. Once the tissue to be reinforced has been soaked in the resin, the composite material is hardening.

One component resin compounds comprise already from the start all reactive and non-reactive substances with consequences as to limitations with respect to storing time and conditioning demands. The chemical reaction in the resin compound is going on in spite of chemical hampering or cooling even though very slowly.

Multi components resin-compounds may be used with the reactive components being separately provided and stored in order to allow more time for storage. Mixture of the reactive components is accomplished only little time before the resin is prepared for production. Consequently high level requests result as to precision and quality of the procedure of measuring into doses and mixing. Measuring into doses may be done on the basis of volumes or weight, continuously or on the basis of charges.

Known preparation procedures can accomplish continuous delivery of resins only with important disadvantages, e. g. slow intervals and long hardening times. In such cases the finished mixed resin has to be stored. The expense in installations inclosing cleaning and regulation may be very high.

In order to avoid this problem the resin compounds are processed in charges. In order to avoid that the chemical reaction in the resin compound will go on in spite of chemical hampering or cooling and in order to avoid high expenses in installations the multi components resins compound is preferably measured into doses and mixed by charges. For further simplification and for the reliability the process of measuring into doses and mixing should be gravimetric and not volumetric. In case of measuring into doses and mixing by charges there is effectively a problem of time for the provision of the resin compounds, particularly if the requested quantities are above a certain limit, together with the problem that the chemical reaction in the resin compound will go on in spite of chemical hampering or cooling.

It is an object of the present invention to provide a method for preparing a composite material of more than one component without the problems of the state of the art.

The solution is provided with a method for preparing a composite material of more than one component with the features of claim 1. Preferred embodiments of the invention are presented in the subclaims.

According to the invention a method for preparing a composite material of more than one component is provided with the steps of providing at least two resin components (Kₐ, K_{b}, ... Kₓ) in at least one container, measuring the at least two resin components (Kₐ, K_{b}, ... Kₓ) in the at least one container, making each of the at least one container with the respective resin components (Kₐ, K_{b}, ... Kₓ) separately available to a mixer, mixing the respective resin components (Kₐ, K_{b}, ... Kₓ) in the at least one container to a resin compound and filling of the resin compound into a supply station of an injection device for further processing to a composite material. The invention provides the combination of the process of preparation and the process of injection thus allowing with simple devices the fabrication of composite materials in less time and with less consumption of material. The mixer as a central device of the invention does not need anymore any cleaning from resin soiling allowing very fast mixing and fast transfer into another container for example if multiple measurements are to be mixed with each other. The inventive method allows amplification from the quantities of laboratory samples to the quantities needed for production.

According to a preferred embodiment of the invention at least one quantity of the respective resin components (Kₐ, K_{b}, ... Kₓ) is more than 1 kg thus allowing preparation of quantities for industrial use.

According to another preferred embodiment of the invention the quantities of the at least two resin components (Kₐ, K_{b}, ... Kₓ) are determined by gravimetric measuring thus reducing the expense for installation.

According to another preferred embodiment of the invention the measured respective resin components (Kₐ, K_{b}, ... Kₓ) are filled into a plurality of separate containers for increased throughput.

According to another preferred embodiment of the invention the separate containers are suitably shaped to fit with the respective resin components (Kₐ, K_{b}, ... Kₓ) into the mixer.

A preferred embodiment of the invention is presented in the attached drawings.
Fig. 1, 2 show an installation for the preparation of composite materials according to the state of the art,
Fig. 3 shows an installation for the method according to the invention.

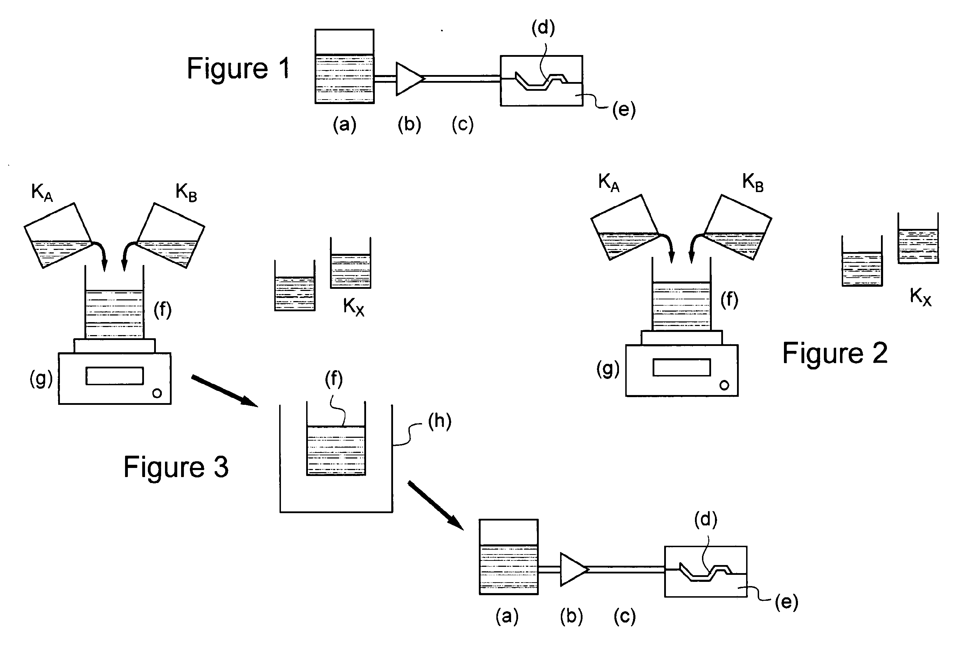

According to Fig. 1, 2, an installation for the preparation of composite materials is generally accomplished with the basic steps of conveying (b) the resin by means of a system of tubes (c) from a supply station (a) to a tissue (d) to be covered for reinforcement. Joining of the resin and the tissue to be reinforced is effected in a mould (e). Once the tissue to be reinforced has been soaked in the resin the composite material is hardened. Limited quantities of resin components (Kₐ, K_{b}, ... Kₓ) of different viscosities and state of matter, i. e. liquid or powdery, can be provided in separate containers and can be mixed subsequently into a common container (f). A measuring device (g) determines the quantity in container (f) before delivery to the supply station (a).

According to Fig. 3, one or more resin components (Kₐ, K_{b}, ... Kₓ) of different viscosities and state of matter, i. e. liquid or powdery, are measured in a gravimetric way by means of one or more measuring devices (g) and filled into one or more containers (f). Container (f) is suitable for installation into a mixer (h). Mixer (h) is equipped as a 2-axle mixer for fast and reliable mixing of the resin components (Kₐ, K_{b}, ... Kₓ) to a resin compound in container (f). The resin compound is filled from the one or more containers (f) into the supply station (a) for further processing to a composite material.

## Claims

1. A method for preparing a composite material of more than one component with the steps:
- providing at least two resin components (Kₐ, K_{b}, ... Kₓ) in at least one container (f),
- measuring the at least two resin components (Ka, Kb, ... Kx) in the at least one container (f),
- making each of the at least one container (f) with the respective resin components (Ka, Kb, ... Kx) separately available to a mixer (h),
- mixing of the respective resin components (Ka, Kb, ... Kx) in the at least one container (f) to a resin compound and
- filling of the resin compound from the at least one container (f) into a supply station (a) of an injection device for a composite material.

2. A method according to claim 1,
**characterized in that** at least one quantity of the respective resin components (Ka, Kb, ... Kx) is more than 1 kg.

3. A method according to claim 1,
**characterized by** gravimetric measuring of the at least two resin components (Kₐ, K_{b}, ... Kₓ).

4. A method according to claim 1,
**characterized by** filling and measuring the respective resin components (Ka, Kb, ... Kx) into a plurality of separate containers (f).

5. A method according to claim 4,
**characterized by** putting the separate containers (f) with the respective resin components (Kₐ, K_{b}, ... Kₓ) into the mixer (h).
